Europäisches Patentamt

European Patent Office

Office européen des brevets

(11) Numéro de publication: **0 153 240**
**B1**

## (12) FASCICULE DE BREVET EUROPEEN

(45) Date de publication du fascicule du brevet: **07.12.88**

(21) Numéro de dépôt: **85400241.7**

(22) Date de dépôt: **13.02.85**

(51) Int. Cl.⁴: **G 21 C 7/26, G 21 C 3/32**

(54) Réacteur nucléaire du type sous-modéré.

(30) Priorité: **16.02.84 FR 8402329**

(43) Date de publication de la demande:
**28.08.85 Bulletin 85/35**

(45) Mention de la délivrance du brevet:
**07.12.88 Bulletin 88/49**

(84) Etats contractants désignés:
**AT BE CH DE GB IT LI SE**

(56) Documents cités:
**EP-A-0 054 238**
**EP-A-0 081 429**
**FR-A-1 413 655**
**FR-A-2 130 225**
**US-A-3 957 575**
**US-A-4 255 236**

(73) Titulaire: **FRAMATOME**
**Tour Fiat 1 place de la Coupole**
**F-92400 Courbevoie (FR)**

(72) Inventeur: **Millot, Jean-Paul**
**1, Allée des Roitelets**
**F-78130 Elancourt (FR)**

(74) Mandataire: **Fort, Jacques et al**
**CABINET PLASSERAUD 84, rue d'Amsterdam**
**F-75009 Paris (FR)**

Courier Press, Leamington Spa, England.

## Description

L'invention concerne un réacteur nucléaire du type sous-modéré selon le préambule de revendication 1.

Dans ces réacteurs nucléaires, le coeur est constitué par des assemblages combustibles de forme prismatique juxtaposés dont chacun est constitué par un faisceau d'éléments combustibles ou crayons renfermant de la matière fissile ou fertile. Dans chacun des assemblages combustibles, les crayons sont espacés transversalement de façon à permettre le passage de l'eau de refroidissement et de modération entre les crayons combustibles. Cet espacement transversal est choisi de façon que le volume de modérateur soit suffisant pour ralentir les neutrons et pour permettre une exploitation du réacteur dans de bonnes conditions.

On définit ainsi un rapport de modération qui est égal au rapport du volume de modérateur sur le volume du matériau fissile dans le coeur VM/VU.

Dans les réacteurs à eau légère sous pression de type classique, le rapport de modération est choisi de façon que les neutrons soient ralentis jusque dans le domaine thermique.

Dans d'autres types de réacteur, les neutrons ne sont pas modérés et leur spectre d'énergie reste dans le domaine rapide.

D'autres types de réacteur ont été proposés plus récemment dans lesquels une diminution du rapport de modération permet de faire fonctionner le réacteur avec des neutrons ayant une énergie intermédiaire entre celle des neutrons thermiques et celles des neutrons rapides appelés neutrons épithermiques.

De tels réacteurs comportant un coeur dont le rapport de modération est réduit par rapport aux réacteurs à eau légère de type classique, sont appelés "réacteurs sous-modérés". Le décalage du spectre des neutrons vers les hautes énergies en même temps que la présence de matériau fertile dans ces réacteurs permet de produire du matériau fissile à partir de matériau fertile et d'économiser du matériau combustible nucléaire.

La diminution du rapport de modération est obtenu en diminuant l'espacement des éléments combustibles du réseau constituant le coeur. Cette diminution du rapport de modération permet d'augmenter le taux de conversion de la matière fertile en matière fissile.

Le taux de conversion est défini comme le rapport du nombre de captures de neutrons dans la matière fertile telle que par exemple l'Uranium 238 au nombre d'absorptions de neutrons dans la matière fissile telle que l'Uranium 235 ou le plutonium 239. Ce taux de conversion represente donc bien la capacité du réacteur à transformer par capture la matière fertile en matière fissile.

Lorsque le taux de conversion augmente et dépasse la valeur 1, on économise du combustible nucléaire et donc de la matière première permettant d'obtenir ce combustible, à savoir l'Uranium naturel.

Le décalage du spectre des neutrons vers les hautes énergies jusque dans le domaine épithermique permet de favoriser les absorptions de résonance des neutrons par l'Uranium 238.

Les réacteurs sous-modérés comportent généralement deux types d'assemblages combustibles, les uns appelés assemblages fissiles renfermant principalement du matériau fissile et les autres appelés assemblages fertiles renfermant un matériau susceptible de se transformer en matériau fissile sous l'effet du bombardement neutronique. Les assemblages fertiles sont généralement disposés à la périphérie du coeur où ils recueillent le rayonnement neutronique produit par les assemblages fissiles.

Le fluide modérateur qui est par exemple de l'eau légère sous pression circule en contact avec la surface externe des éléments combustibles disposés parallèlement les uns aux autres à l'intérieur des assemblages combustibles. Ce fluide de modération sert également de fluide caloporteur permettant le refroidissement du coeur et le transport de la chaleur du coeur vers les générateurs de vapeur.

Dans les réacteurs sous-modérés, l'espacement transversal entre les crayons combustibles des assemblages constituant le coeur a une valeur faible, si bien que la lame d'eau de modération entourant les crayons combustibles est de faible épaisseur. Il est cependant nécessaire de maintenir un espacement constant et suffisant entre les crayons pour assurer le refroidissement de ceux-ci par l'eau en circulation en contact avec leur surface externe. On utilise, par exemple, des fils enroulés en hélice autour des crayons combustibles pour maintenir un tel espacement faible entre les crayons à l'intérieur des assemblages combustibles.

On connaît d'autre part, par le brevet français FR-A-2535509 de la Société FRAMATOME, un réacteur d'une structure comparable à celle des réacteurs à eau sous pression de type classique dans lequel on utilise un dispositif mécanique de variation de spectre neutronique, dans le but de réaliser une économie sur la consommation du combustible et donc sur la consommation d'uranium naturel et sur le coût d'enrichissement de cet uranium naturel. Ce dispositif mécanique de variation de spectre utilise des grappes de crayons contenant un matériau fertile tel que l'uranium naturel qui peuvent être déplacées de façon à être introduites dans le coeur ou, au contraire, extraites au cours du fonctionnement du réacteur. Les crayons fertiles de ces grappes qui sont introduits dans certains tubesguides des assemblages du coeur empêchent donc le modérateur de pénétrer dans ces tubes-guides et diminent ainsi le volume de modérateur dans le coeur et le rapport de modération.

On peut ainsi, en introduisant les grappes de variation de spectre dans le coeur, au cours de la première partie du cycle de combustion de ce coeur, décaler le spectre d'énergie des neutrons vers les hautes énergies et augmenter le taux de conversion de la matière fertile en matière fissile. Dans une

## EP 0 153 240 B1

seconde partie du cycle de combustion du coeur, on extrait les grappes de variation de spectre et la matière fissile formée pendant la première partie du cycle est partiellement consommée. On réalise ainsi une économie de combustible en augmentant le taux de conversion d'environ 10 % par rapport à un réacteur à eau sous pression de type classique.

Dans de tels réacteurs à variation de spectre, on doit prévoir certains tubes-guides pour l'introduction des crayons en matériau fertile qui permettent de diminuer le rapport de modération et d'absorber les neutrons de faible énergie. On doit prévoir également à l'intérieur des tubesguides un espace suffisant pour refroidir les crayons fertiles qui s'échauffent lorsqu'ils sont introduits dans le coeur du réacteur.

Dans les réacteurs sous-modérés, le resserrement du pas du réseau des éléments combustibles rendrait très difficile l'implantation de tubesguides destinés à recevoir des grappes de crayons fertiles de variation de spectre.

Dans le coeur des réacteurs sous-modérés, l'espacement des éléments combustibles disposés verticalement suivant un réseau régulier à mailles triangulaires ou carrées dans les sections transversales du coeur doit avoir une valeur faible par exemple de l'ordre d'un millimètre. Dans ce cas, ces éléments combustibles doivent avoir une gaine en un matériau qui ne subisse pas de gonflement sous l'effet de l'irradiation des neutrons ou en régime accidentel. On ne peut utiliser un matériau tel que l'alliage de zirconium appelé Zircaloy qui subit un gonflement lors de certains accidents tels que la rupture d'une tuyauterie primaire, si bien que les éléments combustibles ou crayons peuvent être amenés à entrer en contact sur une certaine partie de leur longueur. Ces zones de contact entre les crayons combustibles créent des obstacles à la circulation du réfrigérant et limitent les possibilités de refroidissement du coeur.

On utilise donc dans le cas des réacteurs sous-modérés de l'acier inoxydable comme matériau de gainage des éléments combustibles. Cependant, l'acier inoxydable est la cause d'une absorption parasite de neutrons beaucoup plus importante que dans le cas où l'on utilise le Zircaloy comme matériau de gainage. Cette absorption parasite entraîne une diminution du taux de conversion et impose une augmentation de l'enrichissement initial en matière fissile du combustible, ce qui se traduit par une quantité plus importante de matière fissile immobilisée par le réacteur.

Une utilisation du Zircaloy comme matériau de gainage imposerait que l'on réduise la puissance linéique du combustible, ce qui nécessiterait qu'on augmente la masse de combustible du coeur pour produire une puissance équivalente.

Le but de l'invention est donc de proposer un réacteur nucléaire du type sous-modéré dont de coeur plongé dans de l'eau légère de refroidissement et de modération est constitué par des éléments combustibles fissiles ou fertiles disposés parallèlement à une même direction et suivant un réseau régulier, avec un espacement transversal réduit par rapport à un réseau d'éléments combustibles dans le coeur d'un réacteur fonctionnant avec un spectre de neutrons thermiques, réacteur nucléaire qui permette d'atteindre un taux de conversion élevé et d'obtenir une gestion économique du combustible nucléaire.

Dans ce but, l'invention propose un réacteur nucléaire conforme à la revendication 1 et un procédé de mise en oeuvre de ce réacteur conforme à la revendication 9.

Afin de bien faire comprendre l'invention, on va maintenant décrire, en se référant aux figures à titre d'exemple non limitatif, un mode de réalisation d'un coeur de réacteur nucléaire sous-modéré suivant l'invention.

La figure 1 est une vue en coupe par un plan transversal du coeur d'un réacteur nucléaire sous-modéré suivant l'invention.

La figure 2 est une vue en coupe transversale d'un assemblage fissile du coeur représenté sur la figure 1.

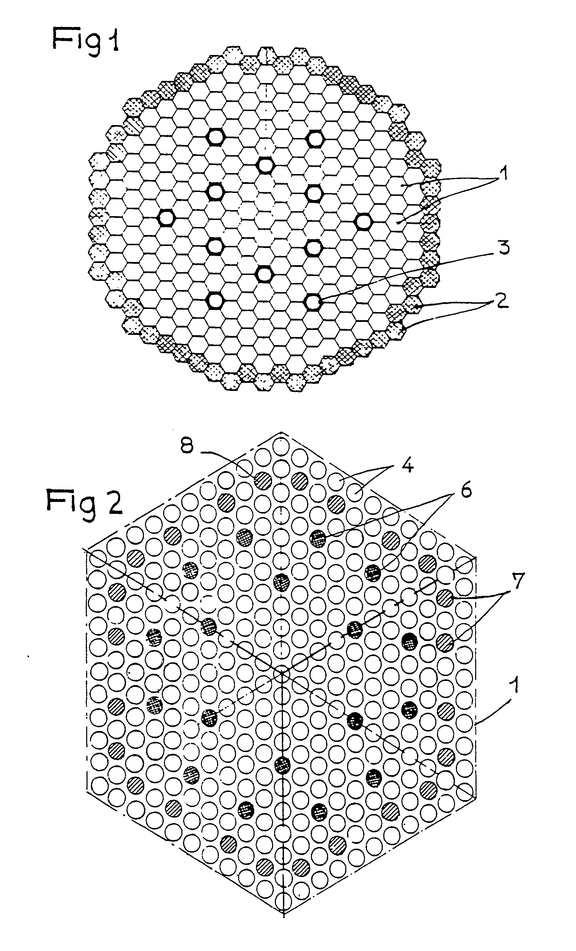

Sur la figure 1 on voit la section transversale, c'est-à-dire par un plan horizontal, du coeur d'un réacteur nucléaire comportant des assemblages de matériau combustible tels que 1, 2 et 3, de forme prismatique à section hexagonale disposés côte à côte et avec leur axe vertical pour constituer le coeur du réacteur.

Les assemblages combustibles sont de trois types différents. Les assemblages 1 sont des assemblages fissiles dont les crayons renferment un mélange d'oxyde d'uranium et d'oxyde de plutonium dont la matière fissile est constituée par de l'uranium 235 et du plutonium 239. Les assemblages 2 sont des assemblages fertiles renfermant des crayons constitués principalement d'uranium naturel. Enfin, les assemblages 3 sont des assemblages faisant partie du système d'arrêt complémentaire du réacteur, par introduction d'une forte anti-réactivité dans le coeur du réacteur. Pendant le fonctionnement du réacteur, la matière fertile du coeur en particulier la matière fertile contenue dans les assemblages périphériques 2 se transforme en matière fissile sous l'effet des neutrons épithermiques produits par la partie fissile du coeur.

Sur la figure 2, on voit un assemblage combustible fissile 1 comportant un ensemble de crayons fissiles 4 disposés suivant un réseau régulier à mailles triangulaires. Chacun des assemblages 1 à section hexagonale est juxtaposé à six autres assemblages dans le coeur, l'ensemble des crayons des assemblages du coeur disposés verticalement constituant un réseau régulier à mailles triangulaires dans les sections transversales du coeur.

Dans le réseau des crayons combustibles 4 constituant l'assemblage 1, certains emplacements 6 et 7 sont occupés par des tubes-guides de même diamètre que les crayons fissiles 4. On désignera par les mêmes repères les emplacements et les tubes-guides qui y sont disposés.

Les dix-huit tubes guides 6 sont destinés à recevoir des crayons de matériau absorbant groupés sous forme d'une grappe qui peut être déplacée dans la direction verticale pour introduire plus ou moins les

3

crayons absorbants dans l'assemblage.

L'ensemble des grappes absorbantes du coeur permet de régler la puissance du réacteur.

Les vingt-quatre tubes-guides 7 de l'assemblage 1 sont destinés à recevoir des crayons 8 en matériau fertile tel que l'uranium naturel ou l'uranium appauvri en uranium 235, au moins pendant la première partie du cycle du réacteur nucléaire.

Les crayons combustibles fissiles 4 sont constitués par une gaine en zirconium remplie par des pastilles d'oxyde mixte $UO_2/PUO_2$.

Les crayons en materiau fertile 8 sont reliés ensemble a leur partie supérieure pour constituer une grappe comparable aux grappes de crayons absorbants utilisées pour la conduite du réacteur. La grappe de crayons fertiles 8 peut être déplacée à l'intérieur des tubes-guides 7, par exemple de la façon décrite dans le brevet francais FR-A-2537764 de la Société FRAMATOME. Dans ce cas, la grappe de crayons fertiles est déplacée par un dispositif de commande associé au dispositif de commande de la grappe de crayons absorbants du même assemblage.

On peut également utiliser des moyens de déplacement de la grappe de crayons fertiles totalement indépendants des moyens de déplacement de la grappe absorbante. Pour diminuer le nombre de mécanismes nécessaires pour le déplacement de ces grappes de crayons absorbants, on peut regrouper les grappes correspondantes à au moins deux assemblages, sur le même mécanisme de déplacement.

La grappe de crayons fertiles 8 constitue un ensemble de barres de variation du spectre d'énergie des neutrons comme il est décrit dans le brevet francais FR-A-2535508 de la Société FRAMATOME.

On trouvera dans le tableau I ci-dessous, les principaux paramètres caractéristiques du coeur de réacteurs modérés de type connu (dans les deux premières colonnes) et du réacteur sous-modéré suivant l'invention (dans la troisième colonne).

TABLEAU I

| | COMBUSTIBLE | | | |
|---|---|---|---|---|
| | réacteur I sous-modéré gaine acier inoxydable | réacteur II sous-modéré gaine Zircaloy | réacteur sous-modéré à variation de spectre gaine Zircaloy suivant l'invention | réacteur à eau sous pression classique |
| Diamètre du crayon | 8,65 mm | 9,5 mm | 9,5 mm | 9,5 mm |
| Pas du réseau | 9,90 mm | 11,15 mm | 12,00 mm | 12,6 mm |
| Espacement entre crayons | 1,25 mm | 1,65 mm | 2,50 mm | 3,1 mm |
| Taux de combustion du coeur | 0,85 | 0,85 | 0,85 | |
| Taux de conversion | 1,06 | 1,06 | 1,06 | |
| Rapport de modération | 0,60 | 0,70 | 1,02 | 1,66 |
| Enrichissement initial en Plutonium fissile (U Naturel + Pu) à même taux de combustion de décharge | 8,5 % | 7,2 % | 5 % | — |

Dans le cas du réacteur sous-modéré de type connu, désigné par réacteur I, le pas du réseau, le diamètre des crayons et l'espacement entre ces crayons ont été considérablement reduits par rapport aux paramètres caractéristiques correspondants d'un réacteur à eau sous pression de type classique. En effet, dans un tel réacteur à eau sous pression de type classique, le diamètre des crayons combustibles constitués par des pastilles combustibles contenues dans une gaine en Zircaloy est de 9,5 mm, le pas du réseau est de 12,6 mm et l'espacement entre les crayons est de 3,1 mm. Les valeurs correspondantes pour le réacteur sous-modéré I sont 8,65 mm, 9,90mm et 1,25 mm. Le rapport de modération du réacteur I est de 0,60 alors qu'il est de 1,66 dans le cas d'un réacteur à eau sous pression classique. Il en résulte un déplacement important du spectre des neutrons vers les hautes énergies et donc un taux de conversion superieur à 1 (1,06) permettant d'obtenir de la matière fissile par conversion de la matière fertile contenue dans le coeur.

Cependant, avec un espacement aussi faible entre les crayons il est nécessaire d'utiliser de l'acier inoxydable comme matériau de gainage pour éviter de limiter la circulation de l'eau sous pression de refroidissement et de modération qui apparaitrait si l'on utilisait un matériau de gainage comme le Zircaloy qui subit un gonflement sous irradiation.

L'utilisation de l'acier inoxydable comme matériau de gainage nécessite à son tour un enrichissement initial du combustible fissile relativement important (8,5 %).

Dans le cas du réacteur sous-modéré II de type connu, le diamètre des crayons est identique au diamètre des crayons dans un réacteur à eau sous pression de type classique (9,5 mm) mais le pas du réseau et l'espacement entre les crayons sont assez largement inférieurs (11,15 mm et 1,65 mm).

Le rapport de modération est de 0,70, ce qui permet un taux de conversion de 1,06.

L'espacement entre les crayons qui est un peu plus grand que dans le cas précédent permet l'utilisation du Zircaloy comme matériau de gainage mais il est cependant nécessaire de limiter la puissance linéique dans le coeur pour éviter un gonflement excessif du Zircaloy.

On utilisera un combustible ayant un enrichissement initial en matière fissile de 7,2 %.

Le réacteur sous-modéré suivant l'invention comporte des crayons combustibles fissiles ayant un diamètre de 9,5 mm disposé avec un pas de 12 mm, ce qui permet de réserver un espacement de 2,50 mm entre les crayons. Cet espacement est inférieur à l'espacement des crayons dans un réacteur à eau sous pression classique (3,1mm) mais nettement supérieur à l'espacement dans des réacteurs sous-modérés de type connu tels que les réacteurs I et II (1,25 et 1,65 mm).

Cet espacement relativement important qui pourra être compris entre 2 et 3 mm permet l'utilisation du Zircaloy comme matériau de gainage sans avoir à limiter la puissance linéique dans le coeur du réacteur.

On utilise un enrichissement initial du combustible en matière fissile faible (5 %).

Le rapport de modération dans le réacteur nucléaire suivant l'invention est plus élevé que dans les réacteurs sous-modérés de type connu (1,02 au lieu de 0,60 et 0,70).

Cependant, pendant toute la première partie du cycle de fonctionnement du réacteur, après son rechargement en combustible, on maintient les grappes de matériau fertile en position entièrement insérées dans les assemblages, si bien qu'on ramène ainsi le rapport de modération à une valeur qui se compare favorablement aux valeurs obtenues dans les réacteurs sous-modérés de type classique.

On obtient donc un taux de conversion tout-à-fait comparable à ce qu'il est dans le cas des réacteurs sous-modérés de type connu (1,06).

Dans les réacteurs sous-modérés considérés, qu'ils soient de type connu ou suivant l'invention, on utilise des couches de couverture en matériau fertile disposées aussi bien à la périphérie du coeur (assemblages fertiles 2) que de part et d'autre du coeur à sa partie inférieure et à sa partie supérieure. Le taux de conversion obtenu dans les réacteurs sous-modérés tient donc compte des conversions obtenues dans ces couches de couverture fertiles.

De plus, dans le cas d'un réacteur sous-modéré suivant l'invention, les crayons fertiles 8 introduits dans le coeur dans la première partie du cycle de combustion de ce coeur (d'une durée égale au 4/5e du cycle total) permettent non seulement de diminuer le rapport de modération mais encore d'augmenter le taux de conversion par introduction de matière fertile dans la zone de production de neutrons épithermiques. Ceci explique en particulier qu'on obtienne un taux de conversion équivalent à celui des réacteurs sous-modérés malgré un rapport de modération plus grand.

Pendant la seconde partie du cycle du combustible dans le coeur (1/5e de la durée totale) la matière fissile produite peut être consommée, ce qui permet en définitive une économie sur l'exploitation du combustible du coeur.

On obtient, dans le cas d'un réacteur sous-modéré suivant l'invention, un taux de combustion du coeur équivalent à celui des réacteurs sousmodérés de type connu (0,85).

Les principaux avantages du réacteur nucléaire suivant l'invention sont de permettre d'obtenir un taux de conversion élevé et une économie importante dans l'exploitation du combustible, par rapport à un réacteur de type classique à neutrons thermiques. Ces conditions favorables d'exploitation sont obtenues avec un combustible dont le taux d'enrichissement initial est faible.

L'invention ne se limite pas au mode de réalisation qui a été décrit. C'est ainsi qu'il est possible d'utiliser un espacement entre les crayons différent de 2,50 mm, à partir du moment où cet espacement est compris entre les valeurs adoptées pour un réacteur sous-modéré de type connu (un peu supérieures à 1

6

mm) et les valeurs retenues dans un réacteur à neutrons thermiques classique (un peu supérieures à 3 mm).

On peut utiliser des grappes de crayons fertiles constituées d'une manière quelconque, à partir du moment où leur effet sur le rapport de modération est suffisant. Ces grappes de crayons fertiles peuvent être associées à un assemblage particulier du coeur ou au contraire être introduites dans des emplacements du coeur, entre les éléments combustibles, indépendamment de la structure des assemblages combustibles.

On peut utiliser des mécanismes de commande associés à un nombre quelconque de grappes relatives chacune à un assemblage.

Dans les assemblages combustibles, en fonction de la section transversale de ces assemblages, on pourra disposer les tubes-guides recevant les grappes de crayons fertiles d'une manière quelconque, suivant que ces tubes-guides participent ou non au renforcement de la structure de l'assemblage.

Les mécanismes de commande des grappes de crayons fertiles de variation de spectre peuvent être associés aux mécanismes correspondants des grappes de matériau absorbant utilisés pour le pilotage du réacteur ou au contraire totalement indépendants de ces mécanismes.

Du fait que les crayons introduits dans le coeur pour diminuer le rapport de modération sont en un matériau fertile, on obtient un gain en ce qui concerne le taux de conversion. En effet, un matériau absorbant les neutrons à faible énergie provoque un effet de durcissement du spectre des neutrons et un matériau fertile permet d'augmenter la quantité de matériau fertile transformé en matériau fissile.

Enfin, l'invention s'applique à tout réacteur nucléaire refroidi et modéré par de l'eau légère dont les éléments combustibles fissiles ou fertiles sont disposés parallèlement à une même direction et suivant un réseau régulier.

**Revendications**

1. Réacteur nucléaire sous-modéré dont le coeur plongé dans de l'eau légère de refroidissement et de modération est constitué par des assemblages combustibles de forme prismatique disposés côte à côte parallèlement à une même direction, contenant chacun des crayons de combustible (4) de même diamètre répartis aux noeuds d'un réseau régulier, certains des noeuds étant démunis de crayons, caractérisé en ce qu'il comprend également des grappes d'éléments (8) contenant du matériau fertile associées à des moyens permettant de les déplacer entre une position d'extraction hors du coeur et une position d'insertion entre les crayons (4), en des noeuds dépourvus de crayons de combustible, de façon à diminuer le volume de modérateur dans le coeur pendant certaines phases au moins du fonctionnement du réacteur, et en ce que les crayons ont un diamètre d'environ 9,5 mm et un espacement compris entre 2 et 3 mm de façon que le rapport de modération lorsque les éléments (8) contenant du matériau fertile sont extraits soit inférieur à la valeur corrspondant à un fonctionnement avec un spectre de neutrons thermiques.

2. Réacteur nucléaire suivant la revendication 1, caractérisé en ce que les éléments (8) en matériau fertile sont constitués par de l'uranium naturel ou appauvri.

3. Réacteur nucléaire suivant la revendication 1 ou 2, caractérisé en ce que les crayons de combustible (4) des assemblages (1) du coeur du réacteur autres que des assemblages fertiles pérphériques (2) sont constitués par des pastilles en matériau fissile disposées à l'intérieur d'une gaine en alliage de zirconium.

4. Réacteur nucléaire suivant la revendication 1, 2 ou 3, caractérisé en ce que les éléments fertiles des grappes sont déplaçables le long de tubes guides occupant des noeuds du réseau dépourvus de crayons.

5. Réacteur nucléaire selon l'une quelconque des revendications 1 à 4, caractérisé en ce que les crayons de combustible (4) sont répartis aux noeuds d'un réseau triangulaire.

6. Réacteur nucléaire suivant la revendication 5, caractérisé par le fait que l'espacement entre les crayons de combustible (4) est voisin de 2,5 mm.

7. Réacteur nucléaire suivant l'une quelconque des revendications 1 à 6, caractérisé en ce que le taux d'enrichissement initial des crayons de combustible en matériau fissile est voisin de 5 %.

8. Réacteur nucléaire suivant la revendication 1, caractérisé en ce que les assemblages combustibles sont à section hexagonale, en ce que les crayons de combustibles comportent chacun une gaine en alliage de zirconium contenant des pastilles d'$UO_2$ et sont répartis aux noeuds d'un réseau triangulaire et en ce que l'espacement des crayons avec les tubes guides est compris entre 2 et 3 mm, le diamètre des crayons et l'espacement étant proportionnés de façon que le rapport de modération soit inférieur à 1,66 lorsque les éléments contenant du matériau fertile (8) sont hors du coeur et soit d'environ 0,7 lorsque les éléments contenant du matériau fertile (8) sont dans le coeur.

9. Procédé de mise en oeuvre d'un réacteur nucléaire refroidi et modéré par de l'eau légère et ayant un coeur constitué par des assemblages combustible de forme prismatique disposés côte à côte et parallèlement à une même direction, chaque assemblage comprenant des crayons de combustible de même diamètre répartis aux noeuds d'un réseau régulier dont certains noeuds sont dépourvus de crayons, caractérisé en ce que:

— on fait fonctionner initialement le coeur en mode fortement sous-modéré en maintenant des grappes d'éléments (8) contenant un matériau fertile dans le coeur en certains des noeuds dépourvus de crayon en même temps qu'on commande le réacteur en réglant la puissance du réacteur à l'aide de grappes de crayons de matériau absorbant en des noeuds (6) dépourvus de crayons de combustible (4);

— après environ les 4/5 de la durée totale du cycle du combustible dans le coeur, on retire les grappes d'éléments contenant du matériau fertile (8) pour décaler le spectre d'énergie des neutrons vers les basses énergies d'un montant tel que le spectre neutronique reste plus élevé en energie que le spectre thermique et on poursuit le fonctionnement avec un spectre décalé jusqu'à la fin de durée de vie du coeur;

— le diamètre des crayons de combustible et leur espacement dans le réseau étant proportionnés de façon que le rapport de modération dans le coeur soit d'environ 0,7 avant retrait des grappes et d'environ 1,02 après retrait des grappes.

## Patentansprüche

1. Unter-moderierter Kernreaktor, dessen Kern, der in zur Kühlung und Moderierung dienendes Leichtwasser eingetaucht ist, durch Brennelementbündel mit prismatischer Gestalt gebildet ist, die parallel nebeneinander in ein und derselben Richtung angeordnet sind, wobei jedes Bündel Brennstäbe (4) mit gleichem Durchmesser enthält, die an den Knotenpunkten eines regelmäßigen Netzes liegen, wobei vorbestimmte Knotenpunkte von Stäben frei sind,

dadurch gekennzeichnet, daß er auch Bündel von Elementen (8) aufweist, die brütbares Material enthalten und denen Mittel zugeordnet sind, die eine Bewegung der Elemente zwischen einer Stellung, in der sie aus dem Kern herausgezogen sind, und einer Stellung ermöglichen, in der sie zwischen die Stäbe (4) an den von Brennstäben freien Knotenpunkten eingeführt sind, um das Moderatorvolumen im Kern während bestimmter Betriebsphasen des Reaktors zu verringern,

und daß die Stäbe einen Durchmesser von etwa 9,5 mm und einen gegenseitigen Abstand zwischen 2 und 3 mm haben, so daß das Moderierungsverhältnis, wenn die brütbares Material enthaltenden Elemente (8) herausgezogen sind, kleiner als der entsprechende Wert bei einem Betrieb mit einem Spektrum thermischer Neutronen ist.

2. Kernreaktor nach Anspruch 1, dadurch gekennzeichnet, daß die Elemente (8) aus brütbarem Material aus Natururan oder verarmtem Uran gebildet sind.

3. Kernreaktor nach Anspruch 1 oder 2, dadurch gekennzeichnet, daß die Brennstäbe (4) der von den brütbaren Umfangs-Brennelementbündeln (2) verschiedenen Brennelementbündel (1) des Reaktorkernes aus Pastillen aus spaltbarem Material gebildet sind, die im Inneren einer Hülle aus einer Zirkonlegierung angeordnet sind.

4. Kernreaktor nach einem der Ansprüche 1—3, dadurch gekennzeichnet, daß die brütbaren Elemente der Bündel entlang von Führungsrohem bewegbar sind, welche die von Stäben freien Netz-Knotenpunkte einnehmen.

5. Kernreaktor nach einem der Ansprüche 1—4, dadurch gekennzeichnet, daß die Brennstäbe (4) auf die Knotenpunkte eines dreieckigen Netzes verteilte sind.

6. Kernreaktor nach Anspruch 5, dadurch gekennzeichnet, daß der gegenseitige Abstand der Brennstäbe (4) etwa 2,5 mm beträgt.

7. Kernreaktor nach einem der Ansprüche 1 bis 6, dadurch gekennzeichnet, daß der anfängliche Anreicherungsgrad der Brennstäbe aus spaltbarem Material etwa 5% beträgt.

8. Kernreaktor nach Anspruch 1, dadurch gekennzeichnet, daß die Brennelementbündel sechseckigen Querschnitt haben, daß die Brennstäbe je eine Hülle aus einer Zirkonlegierung aufweisen, die Pastillen aus $UO_2$ enthalten und auf die Knotenpunkte eines dreieckigen Netzes verteilt sind, und daß der gegenseitige Abstand der Stäbe mit den Führungsrohren zwischen 2 und 3 mm beträgt, wobei der Durchmesser der Stäbe und der Abstand derart proportioniert sind, daß das Moderierungsverhältnis kleiner als 1,66 ist, wenn die brütbares Material enthaltenden Elemente (8) sich außerhalb des Kernes befinden, und etwa 0,7, wenn die brütbares Material enthaltenden Elemente (8) sich im Kern befinden.

9. Verfahren zum Betrieb eines mit Leichtwasser gekühlten und moderierten Kernreaktors, dessen Kern aus Brennelementbündeln mit primsatischer Gestalt gebildet ist, die parallel nebeneinander in der gleichen Richtung angeordnet sind, wobei jedes Bündel Brennstäbe des gleichen Durchmessers enthält, die auf die Knotenpunkte eines regelmäßigen Netzes verteilt sind, wobei bestimmte Knoten von Stäben frei sind, dadurch gekennzeichnet, daß

— man anfänglich den Kern im stark unter-moderierten Modus betreibt, indem man die Bündel aus brütbares Material enthaltenden Elementen (8) im Kern an bestimmten von Stäben freien Knoten hält, während man gleichzeitig den Reaktor steuert, indem man die Leistung des Reaktors mit Hilfe von Stabbündeln aus absorbierendem Material an von Brennstäben (4) freien Knoten (6) regelt;

— man nach etwa 4/5 der Gesamtdauer der Zyklus des Brennstoffes im Kern die Bündel aus brütbares Material enthaltenden Elementen (8) herauszieht, um das Neutronenergiespektrum gegen geringere Energieinhalte abzuschwächen, in einem solchen Ausmaß, daß das Neutronenspektrum auf höherer Energie verbleibt als das thermische Spektrum und daß man den Betrieb mit einem abgeschwächten Spektrum bis zum ende der Lebensdauer des Kernes fortsetzt;

— man den Durchmesser der Brennstäbe und ihren gegenseitigen Abstand im Netz derart proportioniert, daß das Moderierungsverhältnis im Kern etwa 0,7 beträgt, bevor die Bündel zurückgezogen werden, und etwa 1,02 nach dem Zurückziehen der Bündel.

# EP 0 153 240 B1

**Claims**

1. Undermoderated nuclear reactor the core of which is immersed in cooling and moderating light water and is constituted of fuel assemblies of prismatic shape arranged side by side and parallel to a same direction, each containing fuel rods (4) having the same diameter and distributed at the nodal points of a regular array, some of the nodal points being devoid of rods,

characterized in that it further comprises clusters of elements (8) which contain fertile material, associated with means for moving them between an extracted position out of the core and a position where they are inserted betweeen the rods (4), at nodal points which are devoid of fuel rods, for decreasing the volume of moderator in the core during certain phases at least of reactor operation,

and in that the rods have a diameter of about 9.5 mm and a spacing of from 2 to 3 mm whereby the moderation ratio when the fertile material containing elements (8) are extracted is lower than the value corresponding to operation with a thermal neutron spectrum.

2. Nuclear reactor according to claim 1, characterized in that the fertile material elements (8) contain natural or depleted uranium.

3. Nuclear reactor according to claim 1 or 2, characterized in that the fuel rods (4) of the assemblies (1) of the reactor core other than peripheral fertile assemblies (2) consist of fissile material pellets located in a zirconium alloy sheath.

4. Nuclear reactor according to claim 1, 2 or 3, characterized in that the fertile elements of the clusters are movable along guide tubes located at nodal points of the array which are devoid of rods.

5. Nuclear reactor according to any one of claims 1—4, characterized in that the fuel rods (4) are distributed at the nodal points of a triangular array.

6. Nuclear reactor according to claim 5, characterized in that the spacing between the fuel rods (4) is about 2.5 mm.

7. Nuclear reactor according to any one of claims 1—6, characterized in that the initial degree of enrichment of the fuel rods in fissile material is about 5%.

8. Nuclear reactor according to claim 1, characterized in that the fuel assemblies have a hexagonal cross-section, in that the fuel rods each have a zirconium alloy sheath containing $UO_2$ pellets and are distributed at the nodal points of a triangular array, and in that the spacing of the rods with the guide tubes is of from 2 to 3 mm, the diameter of the rods and the spacing being so proportioned that the moderation ratio is lower than 0.66 when the fertile material containing elements (8) are out of the core and is of about 0.7 when the fertile material containing elements (8) are within the core.

9. Process for operating a light water cooled and moderated nuclear reactor having a core consisting of fuel assemblies of prismatic shape located side by side and parallel to a same direction, each assembly comprising fuel assemblies having the same diameter and distributed at the nodal points of a regular array some nodal points of which are devoid of rods, characterized in that:

— the core is initially operated in strongly undermoderated condition by maintaining clusters of fertile material containing elements (8) in the core in certain of the nodal points devoid of rods and the reactor is controlled by metering the reactor power with clusters of elements of absorbing material located at nodal points (6) which are devoid of fuel rods (4);

— after about four fifths of the total duration of the fuel cycle in the core, the clusters of fertile material containing elements (8) are withdrawn for shifting the neutron energy spectrum toward lower energies by such an amount that the neutron energy spectrum remains higher than the thermal spectron and operation proceeds with a shifted spectrum up to the end of the core life;

— the diameter of the fuel rods and their spacing within the array being so proportioned that the moderation ratio within the core is about 0.7 before the clusters are withdrawn and about 1.02 after the clusters are withdrawn.

EP 0 153 240 B1

Fig 1

Fig 2